# EUROPEAN PATENT APPLICATION

(11) **EP 2 650 663 A1**
(43) Date of publication of application: **16.10.2013**
(21) Application number: 13161584.1
(22) Date of filing: 28.03.2013
(51) Int. Cl.: G01M 3/18, G01M 3/24

(54) **Water-leakage detection method and water-leakage detection device**

(30) Priority: 11.04.2012 JP 2012090602
(71) Applicant: NEC Corporation, Tokyo 108-8001 (JP)
(72) Inventor: Maruta, Yuuji, Tokyo, 108-8001 (JP); Ootatsume, Kazuhisa, Tokyo, 108-8001 (JP)
(74) Representative: Vossius & Partner

(57) **Abstract**

The water-leakage detection method according to the present invention is a method of detecting a water-leakage using a vibration sensor unit (1) including vibration sensors (12a) and (12b) and an antenna unit (2) including an antenna (21) and includes arranging the vibration sensor unit (1) under the ground; arranging the antenna unit (2) on the surface of the ground other than a part at which a manhole is placed; connecting the vibration sensor unit (1) and the antenna unit (2) via a cable; collecting data by measuring a vibration with the vibration sensors (12a) and (12b) of the vibration sensor unit (1); and sending the collected data to a controller unit (4) on the ground using short-range wireless communication (23) via the antenna unit (2) placed on the surface of the ground, thereby retrieving the data.

## Description

The present invention relates to a water-leakage detection method and a water-leakage detection device.

Water leakages from pipes in water supply facilities are really big social problems. Water leakages from pipes which are laid under the ground and the positions thereof have been detected by skilled investigators using their senses of hearing. This detection is performed as follows. For example, an investigator checks the presence or absence of a water leak sound at a position at which a valve is exposed to the surface of the ground by the sense of hearing in the quiet of the midnight. When a water leak sound is detected, the investigator moves along a pipeline while applying a specialized sound locator to the surface of the ground. Thus, the position of a water-leakage is identified. This method requires no expensive devices. This method, however, has problems in that investigators are required to have skills, and there are big differences in skill among skilled investigators.

Thus, in order to detect water-leakages without relying on people's senses, a method for identifying a position of a water-leakage using a sound detector or a vibration detector attached to a pipe has been studied, for example (e.g., see patent documents 1 to 3). In the method, placing a sensor for detecting a water-leakage directly on a drainpipe utilizing a space in the manhole has been studied.

### Prior Art Documents

### Patent Documents

Patent Document 1: Japanese Patent No. 3032090
Patent Document 2: JP H11-117356 A
Patent Document 3: JP 2001-156514 A

### Summary of Invention

In the case where a sensor is placed directly on a drainpipe utilizing a space in a manhole, it is considered that the sensor placed in the manhole is detached after collecting data. Alternatively, it is considered that data collected in the manhole is communicated to the outside of the manhole. For example, the patent document 3 proposes a technique of attaching and detaching an antenna to a manhole lid. In the case where a device placed in a manhole sends data to the outside of a manhole lid, the manhole has to be provided with a function for communication. That is, an existing manhole lid cannot be used. Thus, a construction cost for changing the manhole lid is increased.

Intervals of placing manholes are not the same. It is to be desired that sensors are arranged at intervals of 100 to several hundred meters in view of a propagation distance of a water leak sound, for example. However, there is a case that manholes are provided at long intervals of 1 km or more according to a drainpipe laid under the ground. In this case, there is a problem in that there is no space to place sensors. It is difficult to build a manhole room for exposing a drainpipe in order only to place a sensor.

Further, the following problems may arise when a manhole is provided with an antenna. An obstacle is caused when opening and closing a lid. A wire is pinched in the lid, which results in breaking of the wire. Furthermore, when an electric power circuit is pulled into a manhole, it is necessary to contract with an electric power company according to each place at which a sensor is placed. Moreover, it is necessary to place an electrical energy meter, which involves complications thereof.

The present invention is intended to provide a water-leakage detection method and a water-leakage detection device by which a sensor can be placed easily and detection can be performed with high accuracy and high reliability regardless of the presence or absence of a manhole.

In order to achieve the aforementioned object, the water-leakage detection method according to the present invention is a water-leakage detection method of detecting a water-leakage using a vibration sensor unit including a vibration sensor and an antenna unit including an antenna, the water-leakage detection method including: arranging the vibration sensor unit under the ground; arranging the antenna unit on the surface of the ground other than a part at which a manhole is placed; connecting the vibration sensor unit and the antenna unit via a cable; collecting data by measuring a vibration with the vibration sensor of the vibration sensor unit; and sending the collected data to a controller unit on the ground using short-range wireless communication via the antenna unit placed on the surface of the ground, thereby retrieving the data.

The water-leakage detection device according to the present invention is a water-leakage detection device for use in the water-leakage detection method according to the present invention, wherein the vibration sensor of the vibration sensor unit is connected via the cable in the state of being exposed to the outside, and the vibration sensor unit other than the vibration sensor is integrated with the antenna unit.

### Effects of the Invention

According to the present invention, a water-leakage detection method and a water-leakage detection device by which a sensor can be placed easily and detection can be performed with high accuracy and high reliability regardless of the presence or absence of a manhole can be provided.

### Brief Description of Drawings

FIG. 1 is a schematic view showing an example (without a manhole) of a water-leakage detection system using a water-leakage detection method and a water-leakage detection device according to the present invention.
FIG. 2 is a schematic view showing a configuration of an example of a water-leakage detection device according to the present invention.
FIG. 3 is a schematic view showing a configuration of another example of a water-leakage detection device according to the present invention.
FIG. 4 is a figure showing an example of placing a water-leakage detection device according to the present invention.
FIG. 5 is a schematic view showing a configuration of an example of a controller unit.
FIG. 6A is a schematic view showing another example (with a manhole) of a water-leakage detection system using a water-leakage detection method and a water-leakage detection device according to the present invention.
FIG. 6B is a schematic view showing yet another example (with a manhole) of a water-leakage detection system using a water-leakage detection method and a water-leakage detection device according to the present invention.
FIG. 7 is a schematic view showing a configuration of an example of an antenna unit (including a solar cell) in a water-leakage detection device according to the present invention.
FIG. 8 is a schematic view showing a configuration of another example of a vibration sensor unit in a water-leakage detection device according to the present invention.
FIG. 9 is a flowchart describing an example of a standard operation of a water-leakage detection device according to the present invention.
FIG. 10 is a flowchart describing an example of a standard operation of a controller unit.
FIG. 11A and 11B are schematic views each showing a configuration of yet another example of a water-leakage detection device according to the present invention.

It is preferred that the vibration sensor of the vibration sensor unit is arranged on a wall of a hole provided from the surface of the ground in the water-leakage detection method according to the present invention.

It is preferred that the vibration sensor of the vibration sensor unit is arranged on a wall of a hole provided from the surface of the ground, a bottom of the hole provided from the surface of the ground is provided so as to reach an outer wall of the manhole, and the wall on which the vibration sensor is arranged is the outer wall of the manhole in the water-leakage detection method according to the present invention.

is also preferred that the vibration sensor unit is arranged in a manhole in the water-leakage detection method according to the present invention.

The antenna unit may be attached to a structure on a road in the water-leakage detection method according to the present invention, for example.

It is preferred that the antenna unit is placed on the surface of the ground beside the lid of the manhole so as to have no irregularity in the water-leakage detection method according to the present invention.

It is preferred that the controller unit receives the data, adds location information to the data, and sends the location information-added data to a water-leakage detection server in the water-leakage detection method according to the present invention.

It is preferred that the antenna unit further includes a power supply unit, electric power is supplied from the power supply unit to the vibration sensor unit, and the power supply unit is at least one selected from the group consisting of a solar cell, a vibration energy harvester, and a long-life battery in the water-leakage detection device according to the present invention.

It is preferred that the antenna unit further includes a LED in the water-leakage detection device according to the present invention.

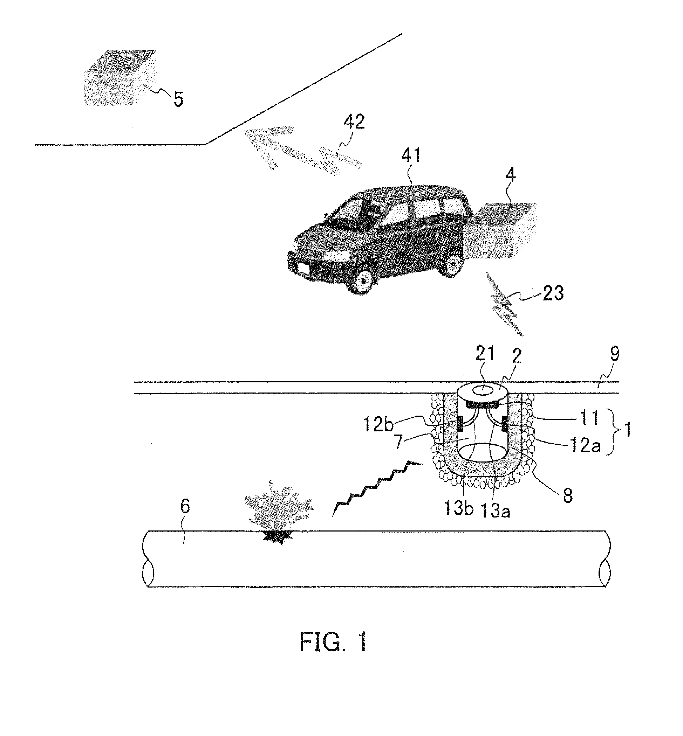

The water-leakage detection method and the water-leakage detection device according to the present invention are described below with reference to embodiments. The present invention, however, is not limited by the following embodiments. In FIGs. 1 to 11, identical parts are denoted by identical reference numerals.

### First embodiment

The first embodiment is an example of a water-leakage detection system using the water-leakage detection method and the water-leakage detection device according to the present invention. FIG. 1 is a schematic view of the water-leakage detection system according to the present embodiment. The present embodiment shows an example of a configuration of the system in the case where the present invention is achieved in a place without a manhole.

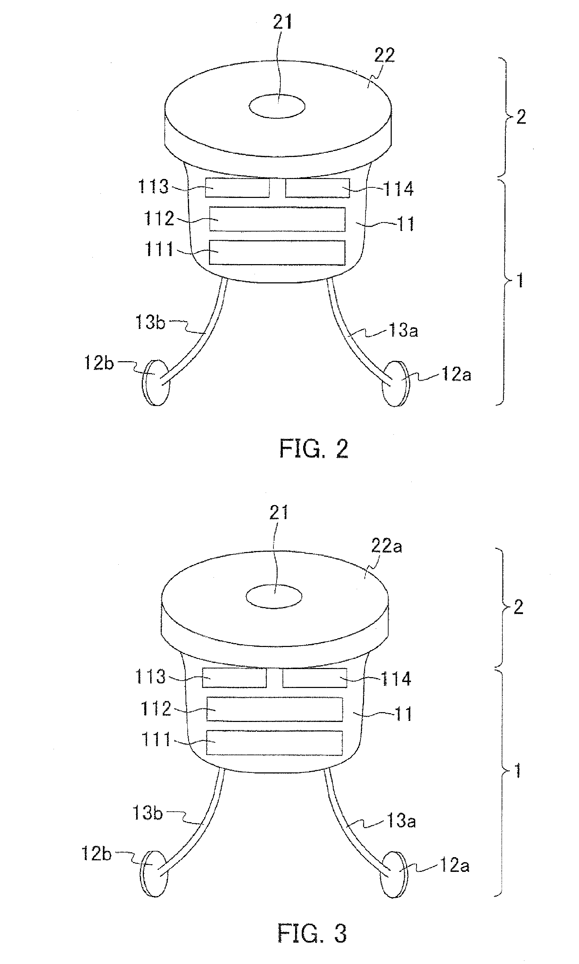

As shown in FIG. 1, in the present embodiment, a water-leakage detection device including: a vibration sensor unit 1 including vibration sensors 12a and 12b; and an antenna unit 2 including an antenna 21 is used. FIG. 2 shows a configuration of an example of the water-leakage detection device. The water-leakage detection device of this example includes: the vibration sensor unit 1; and the antenna unit 2 as main components. The vibration sensor unit 1 includes a main body 11 of the vibration sensor unit; and the two vibration sensors 12a and 12b. The main body 11 of the vibration sensor unit includes: a microcomputer 111; a memory 112; a wireless device 113; and a battery 114. The antenna unit 2 includes the antenna 21, and the antenna 21 is fixed with a housing 22. A part of the vibration sensor unit 1 other than the vibration sensors 12a and 12b, i.e., the main body 11 of the vibration sensor unit is connected to the antenna unit 2 via a cable, so that they are integrated (not shown in FIGs. 1 and 2). In the vibration sensor unit 1, the vibration sensor 12a is connected to the main body 11 of the vibration sensor unit via a cable 13a with the vibration sensor 12a being exposed to the outside. The vibration sensor 12b is connected to the main body 11 of the vibration sensor unit via a cable 13b with the vibration sensor 12b being exposed to the outside.

The microcomputer 111 primary-processes vibration data acquired from the vibration sensors 12a and 12b. The memory 112 stores the primary-processed vibration data. The wireless device 113 sends the vibration data stored in the memory 112 to the outside. The battery 114 supplies electric power to each component of the vibration sensor unit 1. The microcomputer 111 may have a function of managing a timer (hereinafter referred to as a "timer management function") in addition to the above-mentioned function, for example. This function allows a consumption of electric power of the battery 114 to be reduced by specifying time to collect vibration data with the vibration sensors 12a and 12b to nighttime so as to operate the vibration sensors 12a and 12b in the nighttime and specifying time to operate the wireless device 113 to daytime, for example. Known components can be used as components of the vibration sensor unit 1 and the antenna unit 2, for example.

As shown in FIG. 1, a hole which is matched to the dimensions of the antenna unit 2 is dug into the ground so as to ensure an attaching space 7. Then, the vibration sensor unit 1 is placed in the space 7 (under the ground), and the vibration sensors 12a and 12b are placed on a side wall of the space 7. At that time, the space 7 is encased in mortar 8 so that the vibration sensors 12a and 12b can be placed on the side wall of the space 7. Thus, for example, a vibration caused by a water-leakage under the ground can be detected easily. The antenna unit 2 is placed on the hole (the surface of the ground). At that time, it is preferred that the surface height of the upper part of the antenna unit 2 is matched to the surface height of the surface 9 of the ground, so that the antenna unit 2 is placed on the surface 9 of the ground so as to have no irregularity. As described above, according to the present embodiment, the water-leakage detection device including a vibration sensor can be placed easily by providing the surface of the ground with a hole regardless of the presence or absence of a manhole. Moreover, in the present embodiment, wireless data communication from the vibration sensor unit 1 via the antenna 21 of the antenna unit 2 can be achieved while avoiding a shield by placing the antenna unit 2 on the surface of the ground without replacing, converting, opening and closing, and the like of a manhole lid, for example. Furthermore, the present embodiment does not require a manhole. Therefore, even when the battery 114 is replaced periodically, opening and closing of a manhole lid and the cost of the replacement are not required, and traffic is not obstructed, for example.

A water-leakage detection device shown in FIG. 2 is operated by electric power stored in a battery 114 provided in the main body 11 of vibration sensor unit as follows. It is preferred that the water-leakage detection device includes a power supply unit so as to convert external energy into electric power from the viewpoint of unnecessity of replacement of battery. Therefore, in the water-leakage detection device, the antenna unit preferably includes the power supply unit, more preferably includes a solar cell as the power supply unit. FIG. 3 shows a configuration of an example of a water-leakage detection device including a solar cell. As shown in FIG. 3, in the water-leakage detection device of this example, an antenna unit 2 includes: an antenna 21 and a solar eell 22a arranged on the periphery of the antenna 21. In the water-leakage detection device of this example, electric power obtained from the solar cell 22a is stored in the battery 114, and this electric power is supplied to each component of a vibration sensor unit 1. Except for these points, the water-leakage detection device of this example has the same configuration as in the water-leakage detection device shown in FIG. 2. As described above, according to the water-leakage detection device of this example, the vibration sensor unit 1 can be permanently placed under the ground without replacement of battery by supplying electric power from the antenna unit 2 including the solar cell 22a placed on the surface of the ground to the vibration sensor unit 1 placed under the ground, for example. As the solar cell 22a, a known solar cell can be used, for example. In FIG. 3, an example of using a solar cell as a power supply unit which can convert external energy into electricity is described. The present invention, however, is not limited by this example. Examples of the power supply unit includes, besides the solar cell, a vibration energy harvester and a long-life battery. The vibration energy harvester can be, for example, a plate-like vibration energy harvester in which piezoelectric elements are spread. This vibration energy harvester generates electric power by vibrations generated when the vibration energy harvester is stepped by human and the like. The long-life battery can be, for example, a manganese dioxide-lithium battery. The power supply unit may be a combination of the solar cell and a power supply unit other than the above-mentioned solar cell or a combination of power supply units other than the above-mentioned solar cell, for example.

In a water-leakage detection method in the water-leakage detection system according to the present embodiment, first, a vibration sensor unit 1 collects data (vibration data) obtained by measuring vibrations with vibration sensors 12a and 12b. Then, the vibration data is sent to a movable controller unit 4 carried by a vehicle 41 or the like on the ground using short-range wireless communication 23 via an antenna unit 2. The vehicle 41 is required to patrol around a place at which the vibration sensor unit 1 is placed. Therefore, for example, it is also preferred that each of vehicles 41 such as a refuse collection vehicle, a cleaning vehicle and the like, driving around specified places over a wide area carries a controller unit 4, for example. As described above, in the water-leakage detection method, the data obtained by measuring vibrations for detecting a water-leakage among vibrations from not only a drainpipe but also a wall in a space under the ground with the vibration sensors 12a and 12b of the vibration sensor unit 1 placed in the space under the ground is retrieved. Therefore, in the present embodiment, the accuracy of detecting a water-leakage is high, and reliability of the detection is high. The water-leakage detection method is described below in further detail with reference to figures.

As shown in FIG. 1, the vibration data is retrieved by measuring vibrations caused by a water-leakage generated by damage and the like of the drainpipe 6 with the vibration sensors 12a and 12b. Then, the vibration data is primary-processed by a microcomputer 111. The primary-processed vibration data is stored in a memory 112. The vibration data stored in the memory 112 is sent from a wireless device 113 to the controller unit 4 using the short-range wireless communication 23 via an antenna 21 of the antenna unit 2. The vibration data is retrieved as described above in the present embodiment. The short-range wireless communication 23 is not particularly limited, and known communication can be used. For example, 950 MHz wireless communication, 920 MHz wireless communication, or the like can be used. The controller unit 4 adds location information to the vibration data. Thereafter, the vibration data including the location information added thereto is transmitted from the controller unit 4 to a water-leakage detection server 5 placed in a water-leakage management center by a public circuit 42, for example. The public circuit 42 is not particularly limited, and a known public circuit can be used. For example, a packet communication circuit can be used. Lastly, the vibration data is analyzed using a vibration analysis program stored in the water-leakage detection server 5, and the presence or absence of a water-leakage is detected. The water-leakage detection system according to the present embodiment is considered to be applied as an independent system or to be lent as a function of detecting a water-leakage by utilizing the same water-leakage detection server by a plurality of customers utilizing a cloud system, for example. In the case of utilizing the cloud system, the water-leakage detection server 5 is a server utilizing the cloud system, for example. Such server allows the accuracy of detecting a water-leakage to be improved by collecting and learning large quantities of vibration data, for example.

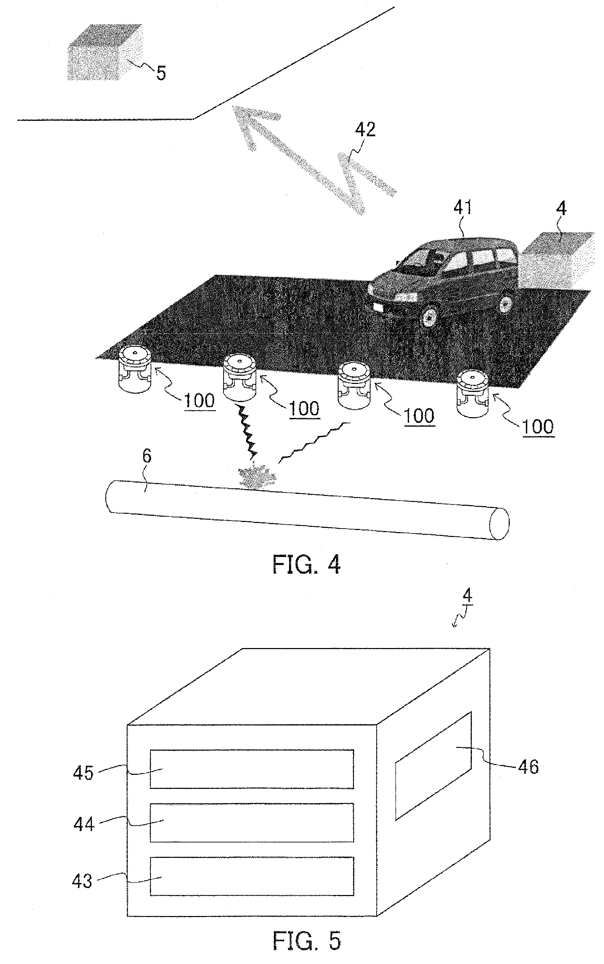

FIG. 5 shows a configuration of an example of a controller unit 4. As shown in FIG. 5, the controller unit 4 of this example includes: a wireless device 43; a GPS information section 44; a data communication section 45; and a power supply 46. The controller unit 4 receives vibration data sent from a wireless device 43 using short-range wireless communication 23 via an antenna 21 of an antenna unit 2. Location information is added to the received vibration data by a GPS information section 44. The vibration data including the location information added thereto is transmitted to the water-leakage detection server 5 by the data communication section 45. For example, in the case where a public circuit 42 is a packet communication circuit, the data communication section 45 is the packet communication circuit, for example. A wireless device 43, a GPS information section 44, and a data communication section 45 are activated by the power supply 46.

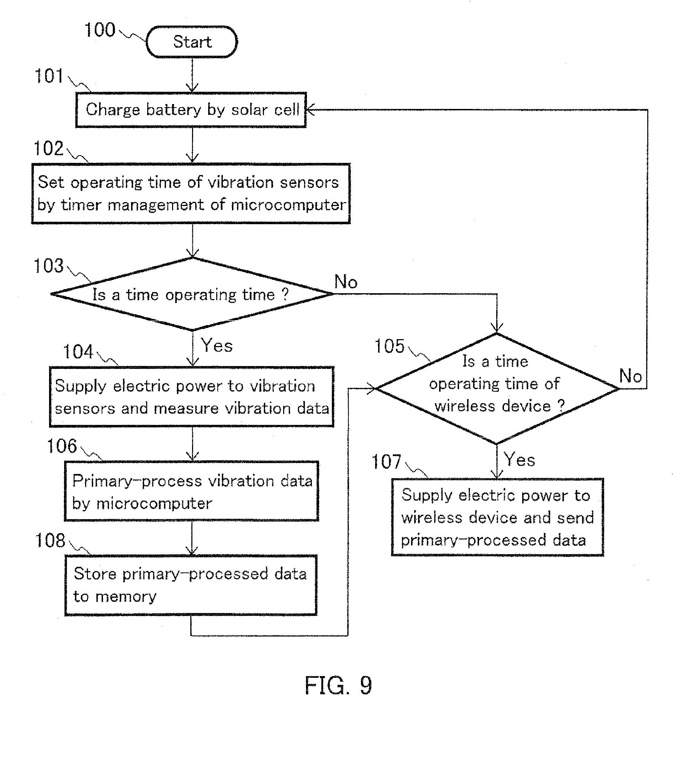

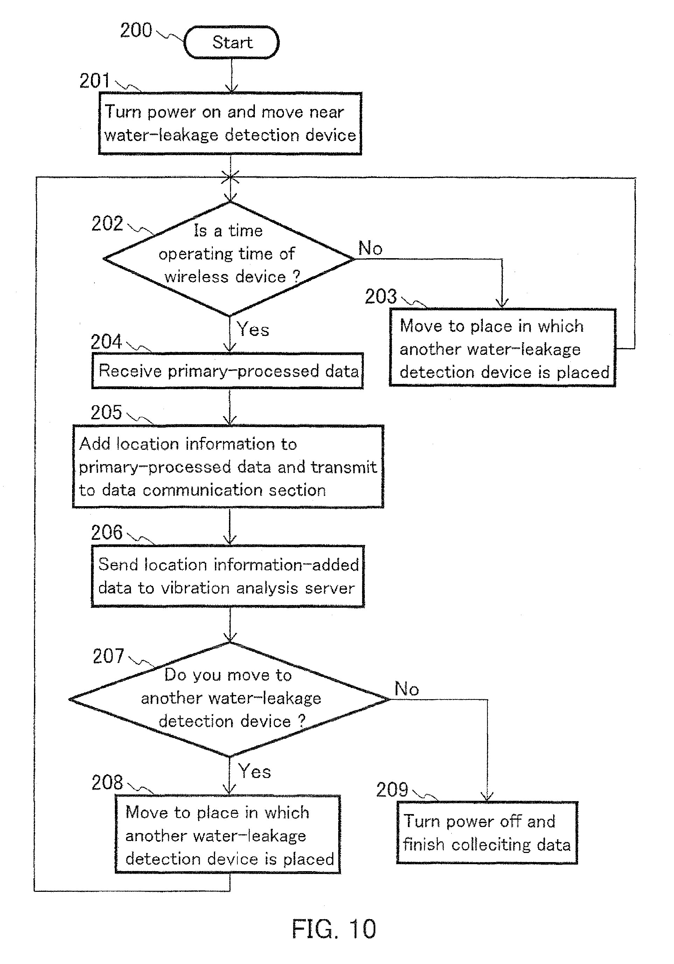

FIG. 9 shows an operation flow of a water-leakage detection device, and the operation is described sequentially. The operation flow with respect to a form (FIG. 3) in which the water-leakage detection device is provided with a solar cell, shown in FIG. 9 is described using a case where a microcomputer of the main body of a vibration sensor unit has a timer management function. In order to simplify the description, it is assumed that short-range wireless communication 23 between a vibration sensor unit 1 and a controller unit 4 has been already established (the same applies in FIG. 10).

After the start of a process (step 100), first, in a step 101, energy of sunlight is converted into electric power by a solar cell 22a in the state where an antenna unit 2 of the water-leakage detection device is placed on the surface of the ground, so that a battery 114 of a main body 11 of a vibration sensor unit is charged. Then, in a step 102, in order to effectively use the electric power charged in the step 101, operating time of vibration sensors 12a and 12b is set using a timer management function of a microcomputer 111 of the main body 11 of the vibration sensor unit. Specifically, for example, in order to differentiate vibrations caused by a water-leakage from a drainpipe 6 from other vibrations caused by traffic noises, vibrations caused by normal use of water, and the like, the operating time is set so that the vibration sensors 12a and 12b operate in late night hours. In a step 103, when a time is operating time of the vibration sensors 12a and 12b (Yes), electric power is supplied to the vibration sensors, and vibration data is measured (a step 104). Then, in a step 106, in order to reduce capacity of or compress the vibration data measured at night in the step 104 as data for communication, the vibration data is subjected to data processing (primary processing) by performing a primary processing task of the microcomputer 111. Thereafter, in a step 108, the vibration data (primary-processed data) subjected to the primary processing in the step 106 is stored in a memory 112 of the main body 11 of the vibration sensor unit. When a time is operating time of a wireless device 113 of the main body 11 of the vibration sensor unit (Yes) in a step 105, electric power is supplied from a battery 114 of the main body 11 of the vibration sensor unit to the wireless device 113 in a step 107, the wireless device 113 is operated, and the primary-processed data stored in the memory 112 is sent using short-range wireless communication 23 via an antenna 21 of the antenna unit 2. As described above, the primary-processed data can be collected by the controller unit 4. When a time is not operating time of the wireless device 113 (No), measurement of vibration data with the vibration sensors 12a and 12b is continued in the step 101. Operating time of the wireless device 113 can be set to daytime using the timer management function of the microcomputer 111, for example. The wireless device 113 is turned off at night at which it is not necessary to perform short-range wireless communication 23 with the controller unit 4 using the timer management function of the microcomputer 111, so that consumption of electric power can be reduced. On the other hand, in the step 103, when a time is daytime in which vibrations caused by traffic noises, vibrations caused by normal use of water, and the like often occur and is not operating time of the vibration sensors 12a and 12b (No), vibrations are not measured with the vibration sensors 12a and 12b. When a time is operating time of the wireless device 113 in the step 105 (Yes), the primary-processed data previously stored in the memory 112 is sent by operating the wireless device 113 through supplying electric power from the battery 114 in the step 107. When a time is not operating time of the wireless device 113 (No), measurement of vibration data with the vibration sensors 12a and 12b is continued in the step 101.

Next, FIG. 10 shows an operation flow of a controller unit at normal time, and the operation is described sequentially.

After the start of a process (step 200), first, in a step 201, the power 46 of a controller unit 4 carried in a vehicle 41 which is a mobile is turned ON, and the vehicle is moved near a water-leakage detection device in the state of maintaining communication with the water-leakage detection device. In a step 202, as mentioned in the step 105 of FIG. 9, when a time is operating time of the wireless device 113, i.e., time of performing short-range wireless communication 23 by a wireless device 113 (Yes), and the vehicle enters a range or an area in which wireless communication can be performed, the primary-processed data is received by automatically performing sending and receiving with the water-leakage detection device using the short-range wireless communication 23. In the step 205, receiving the data acts as a trigger, received location information is added to the primary-processed data received by a GPS information section 44 (location information-added data). Then, the location information-added data is transmitted to a data communication section 45. In a step 206, the location information-added data is sent from the data communication section 45 to a water-leakage detection server (vibration analysis server) 5 placed in a water-leakage management center utilizing a public circuit 42. For example, when the public circuit 42 is a public packet communication circuit of a telephone company, the data communication section 45 is a packet communication section. In a step 207, whether the vehicle is moved to a place at which another water-leakage detection device which is not the water-leakage detection device by which the primary-processed data is received in the step 204 is placed (Yes) or stops collecting data (No) is selected. In the former case (Yes), in a step 208, the vehicle moves to the place at which another water-leakage detection device is placed. Then, with respect to the another water-leakage detection device, the steps 202 to 206 are performed. In the latter case (No), in a step 209, the power 46 is turned OFF, and collection of data is finished. Moreover, when a time is a time in which the wireless device 113 does not perform the short-range wireless communication 23 in the step 202 (No), the vehicle is moved to a place at which another water-leakage detection device is placed in the step 203. Then, with respect to the another water-leakage detection device, the step 202 is performed. When a time is a time in which the wireless device 113 performs the short-range wireless communication 23 (Yes), the steps 204 to 206 are performed.

The operating time of the wireless device 113 can be previously set to about 3 hours, for example, "AM time (9 to 12 o'clock)" using the timer management function of the microcomputer 111 as mentioned above. When the vehicle 41 carrying the controller unit 4 is moved in the set time, data can be collected efficiently. Thus, it is preferred.

As described above, by repeatedly performing standard operation flows shown in FIGs. 9 and 10, the received location information-added data is stored in the water-leakage detection server 5 placed in the water-leakage management center, a water-leakage is determined by vibration analysis, comparison of stored data obtained at the same place, comparison of data obtained under the same condition, and the like. Thus, it is possible to indicate all places at which water-leakage detection devices detecting a water-leakage are placed, for example.

In the present embodiment, the antenna unit 2 of the water-leakage detection device is placed on the surface of a road (the surface of the ground), and the present invention, however, is not limited thereto. It is only necessary that the antenna unit is placed on the surface of the ground other than the place at which a manhole is placed (e.g., a manhole lid). The antenna unit may be placed on a structure on a road, for example. Examples of the structure include a center divider and a guardrail.

In the present embodiment, as shown in FIG. 4, it is preferred that vibration data is acquired by measuring vibrations caused by a water-leakage generated by damage of a predetermined part of the drainpipe 6 with vibration sensors of a plurality of water-leakage detection devices 100. Thus, for example, a water-leakage can be detected more accurately and more reliably. Each of the plurality of the water-leakage detection devices is, for example, a water-leakage detection device shown in FIG. 2 or 3. Intervals of placing the water-leakage detection devices are not particularly limited and are, for example, in a range from 5 to 30 m, more preferably from 5 to 10 m.

In the present invention, a movable controller unit carried in a vehicle 41 or the like is described as the controller unit 4. The controller unit 4 can be placed permanently on a utility pole, or the like, for example. In this case, the controller unit 4 is placed at a place at which the controller unit 4 can receive data by communicating with a plurality of antenna units 2. Then, the vibration data is transmitted from the controller unit 4 to the water-leakage detection server 5 using a public circuit 42 in the same manner as described above, for example. In this case, a main controller unit for assembling data of the plurality of the controller units 4 may be placed in a place in which data can be received from the plurality of the controller units 4, and the data may be transmitted from the main controller unit to the water-leakage detection server 5 using the public circuit 42.

### Second embodiment

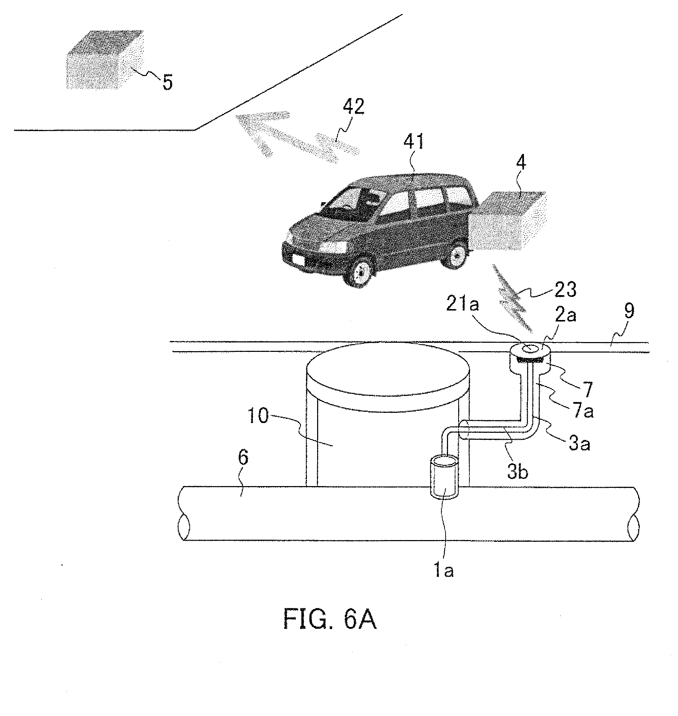

The second embodiment shows an example of a water-leakage detection system using the water-leakage detection method and a water-leakage detection device according to the present invention. FIG. 6A is a schematic view of the water-leakage detection system according to the present embodiment. The present embodiment shows an example of a configuration of the system in the case where the present invention is achieved in the vicinity of a manhole.

As shown in FIG. 6A, a water-leakage detection device including: a vibration sensor unit 1a including a vibration sensor; and an antenna unit 2a including an antenna and a solar cell is used in the present embodiment. The vibration sensor unit 1a and the antenna unit 2a are connected to each other via a coaxial cable 3a for antenna and a power cable 3b for solar cell.

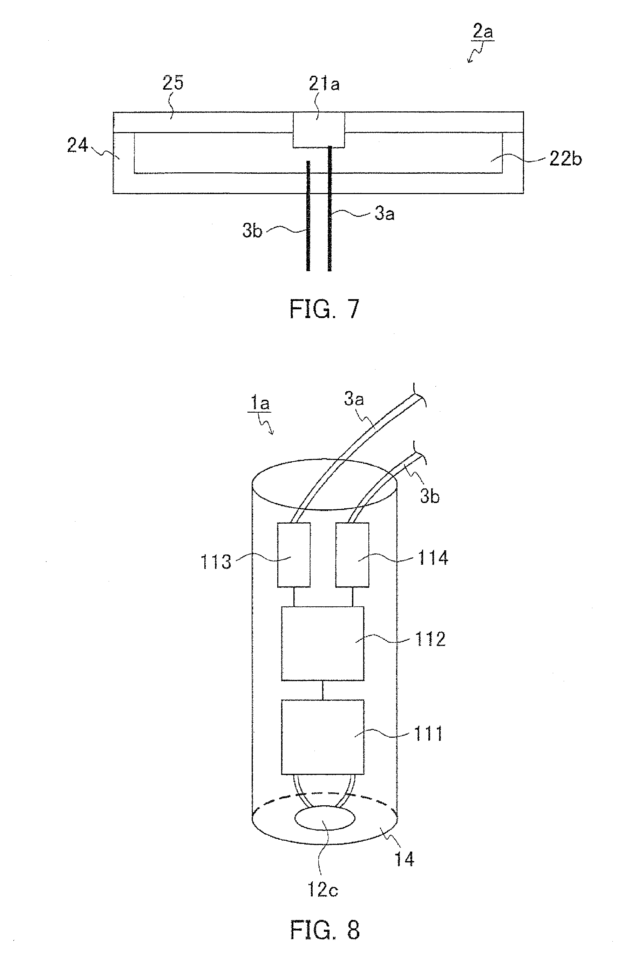

FIG. 7 shows a configuration of an example of the antenna unit 2a. The antenna unit 2a of this example includes: a cylindrical antenna 21a; a circular solar cell panel 22b; a hollow cylindrical base 24; and a circular transparent pressure-resistant cover 25. The antenna 21a and the solar cell panel 22b are attached to the inside of the base 24. The base 24 is designed so as to resist being weighted. A transparent pressure-resistant cover 25 is attached to an upper part of the base 24 in order to prevent a solar cell panel 22b from being damaged when outside pressure is applied. The coaxial cable 3a for antenna is connected to the antenna 21a, and the power cable 3b for solar cell is connected to the solar cell panel 22b.

FIG. 8 shows a configuration of an example of the vibration sensor unit 1a. The vibration sensor unit 1a of this example includes: a vibration sensor 12c; a microcomputer 111; a memory 112; a wireless device 113; a battery 114; and a magnet 14. The vibration sensor 12c is connected to the microcomputer 111 via a cable. The microcomputer 111 is electrically connected to the memory 112. The memory 112 is electrically connected to the wireless device 113 and the battery 114. A coaxial cable 3a for antenna is connected to the wireless device 113. A power cable 3b for solar cell is connected to the battery 114.

The microcomputer 111, the memory112, the wireless device 113, and the battery 114 are the same as those of the first embodiment. The magnet 14 is connected to a drainpipe 6.

In the present embodiment, as shown in FIG. 6A, a hole which is matched to the dimensions of the antenna unit 2a is dug into the ground so as to secure the attaching space 7 by mortar or the like. A bore 7a penetrating through a side wall of the manhole 10 from the bottom of the attaching space 7 is provided as a cable route. Then, the antenna unit 2a is arranged on the hole (the surface of the ground). At that time, it is preferred that the surface height of the upper part of the antenna unit 2 is matched to the surface height of the surface 9 of the ground, so that the antenna unit 2a is placed on the surface 9 of the ground so as to have no irregularity. The coaxial cable 3a for antenna and a power cable 3b for solar cell are arranged in the bore 7a, so that the vibration sensor unit 1a is placed in the manhole 10. In the present embodiment, the vibration sensor unit 1a is placed directly on an outer wall of the drainpipe 6 in the manhole 10 utilizing a magnet 14 thereof. As described above, the effect of the present invention as in the first embodiment can be obtained by placing the vibration sensor unit 1 a and the antenna unit 2a of the water-leakage detection device.

In the water-leakage detection method of the water-leakage detection system according to the present embodiment, vibrations for detecting a water-leakage are measured, and the vibration data is retrieved in the same manner as in the first embodiment except that a vibration sensor unit 1a collects vibration data measured with a vibration sensor 12c placed in a drainpipe 6 in a manhole 10.

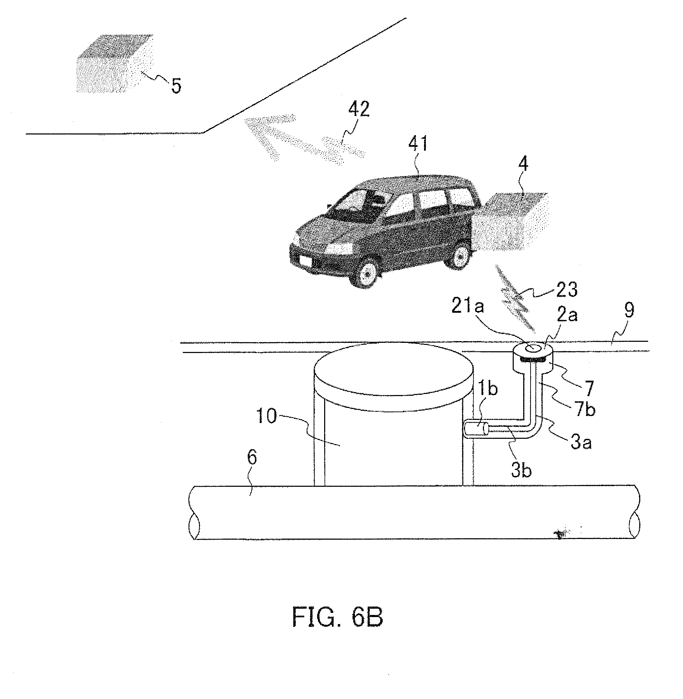

In the present embodiment, the vibration sensor unit of the water-leakage detection device is placed in a manhole, and the present invention, however, is not limited thereto. For example, as shown in FIG. 6B, a bore 7b extended from the bottom of the attaching space 7 to the side wall of the manhole 10 is provided. Then, utilizing this bore 7b, the vibration sensor unit 1b of the water-leakage detection device is placed on the outer surface of the manhole 10. Other than these points, the water-leakage detection system shown in FIG. 6B is the same as that shown in FIG. 6A. For example, in a space of the manhole, there is a case that a pipe is encased in concrete, a valve is placed, and there is a pipe joint, and there is packing in the pipe joint. These may cause a reduction in accuracy of detecting a water-leakage. By placing a vibration sensor unit 1b of the water-leakage detection device on the outer surface of the manhole 10 as shown in FIG. 6B, the above-mentioned problem can be avoided, and the accuracy in detecting a water-leakage can be high, for example.

### Third embodiment

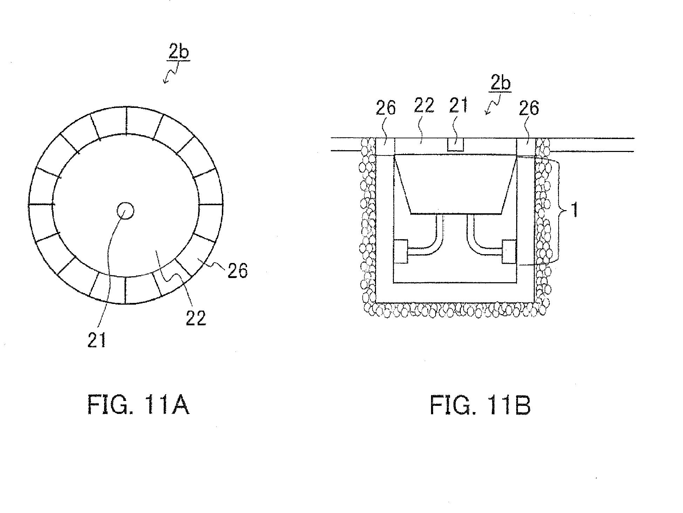

The third embodiment shows an example of a water-leakage detection device for use in a water-leakage detection system. In the water-leakage detection device according to the present embodiment, an antenna unit includes a LED. FIGs. 11A and 11B are schematic views each showing a configuration of the water-leakage detection device according to the present embodiment. FIG. 11A is a top view of an antenna unit in the water-leakage detection device. FIG. 11B is a schematic view showing the state where the water-leakage detection device is placed.

As shown in FIGs. 11A and 11B, the water-leakage detection device according to the present embodiment includes a vibration sensor unit 1 and an antenna unit 2b as main components. The antenna unit 2b includes: an antenna 21; a solar cell 22; and a LED 26. The LED 26 is placed on the periphery of the solar cell 22. Except for these points, the water-leakage detection device according to the present embodiment has the same configuration as in the water-leakage detection device shown in FIG. 3. The LED 26 is not particularly limited, and for example, a known LED can be used. With this configuration, the water-leakage detection device according to the present embodiment has a function of detecting a water-leakage and also functions as traffic safety sign which is a self-emitting road stud, for example. By adding such function, for example, when a road stud is placed, a function of measuring vibration data can be added to the road stud, and a water-leakage detection device used in the water-leakage detection system can be placed over a wide range. Thus, for example, a range of detecting a water-leakage can be expanded.

As described above, according to the water-leakage detection method and the water-leakage detection device according to the present invention, a sensor can be placed easily regardless of the presence or absence of a manhole, and the accuracy and reliability of the detection is high. Thus, the water-leakage detection system using the water-leakage detection method and the water-leakage detection device according to the present invention can be adopted in preventing a water-leakage in a water supply system, maintaining and managing the water supply system, and the like, for example.

### Explanation of reference numerals

| | |
|---|---|
| 1, 1a, 1b | vibration sensor unit |
| 2, 2a, 2b | antenna unit |
| 3a | coaxial cable for antenna |
| 3b | power cable for solar cell |
| 4 | controller unit |
| 5 | water-leakage detection server |
| 6 | drainpipe |
| 7 | attaching space |
| 7a | bore penetrating side wall of manhole 10 from bottom of attaching space 7 |
| 7b | bore reaching side wall of manhole from bottom of attaching space 7 |
| 8 | mortar |
| 9 | surface of the ground |
| 10 | manhole |
| 11 | main body of vibration sensor unit |
| 12a, 12b, 12c | vibration sensor |
| 13a | cable connecting main body 11 of vibration sensor unit and vibration sensor 12a |
| 13b | cable connecting main body 11 of vibration sensor unit and vibration sensor 12b |
| 14 | magnet |
| 21, 21a | antenna |
| 22 | housing |
| 22a | solar cell |
| 22b | solar cell panel |
| 23 | short-range wireless communication |
| 24 | base |
| 25 | transparent pressure-resistant cover |
| 26 | LED |
| 41 | vehicle |
| 42 | public circuit |
| 43 | wireless device |
| 44 | GPS information section |
| 45 | data communication section |
| 46 | power supply |
| 100 | water-leakage detection device |
| 111 | microcomputer |
| 112 | memory |
| 113 | wireless device |
| 114 | battery |

## Claims

1. A water-leakage detection method of detecting a water-leakage using a vibration sensor unit including a vibration sensor and an antenna unit including an antenna, the water-leakage detection method comprising:
arranging the vibration sensor unit under the ground;
arranging the antenna unit on the surface of the ground other than a part at which a manhole is placed;
connecting the vibration sensor unit and the antenna unit via a cable;
collecting data by measuring a vibration with the vibration sensor of the vibration sensor unit; and
sending the collected data to a controller unit on the ground using short-range wireless communication via the antenna unit placed on the surface of the ground, thereby retrieving the data.

2. The water-leakage detection method according to claim 1, wherein
the vibration sensor of the vibration sensor unit is arranged on a wall of a hole provided from the surface of the ground.

3. The water-leakage detection method according to claim 1, wherein
the vibration sensor of the vibration sensor unit is arranged on a wall of a hole provided from the surface of the ground,
a bottom of the hole provided from the surface of the ground is provided so as to reach an outer wall of the manhole, and
the wall on which the vibration sensor is arranged is the outer wall of the manhole.

4. The water-leakage detection method according to claim 1, wherein
the vibration sensor unit is arranged in a manhole.

5. The water-leakage detection method according to any one of claims 1 to 4, wherein the antenna unit is attached to a structure on a road.

6. The water-leakage detection method according to any one of claims 1 to 4, wherein
the antenna unit is placed on the surface of the ground beside the lid of the manhole so as to have no irregularity.

7. The water-leakage detection method according to any one of claims 1 to 6, wherein
the controller unit receives the data, adds location information to the data, and sends the location information-added data to a water-leakage detection server.

8. A water-leakage detection device for use in the water-leakage detection method according to any one of claims 1 to 7, wherein
the vibration sensor of the vibration sensor unit is connected via the cable in the state of being exposed to the outside, and
the vibration sensor unit other than the vibration sensor is integrated with the antenna unit.

9. The water-leakage detection device according to claim 8, wherein
the antenna unit further comprises a power supply unit,
electric power is supplied from the power supply unit to the vibration sensor unit, and
the power supply unit is at least one selected from the group consisting of a solar cell, a vibration energy harvester, and a long-life battery.

10. The water-leakage detection device according to claim 8 or 9, wherein
the antenna unit further comprises a LED.
